## Europäisches Patentamt
## European Patent Office
## Office européen des brevets

(11) Veröffentlichungsnummer: **0 218 156 B1**

# EUROPÄISCHE PATENTSCHRIFT

(45) Veröffentlichungstag der Patentschrift: **02.01.92**

(21) Anmeldenummer: **86113275.1**

(22) Anmeldetag: **26.09.86**

(51) Int. Cl.⁵: **C09B 67/00**, C09B 6/00, C09B 7/00, C09B 47/04

(54) **Verfahren zur Herstellung von Pigmentfarbstoffen.**

(30) Priorität: **10.10.85 DE 3536168**

(43) Veröffentlichungstag der Anmeldung:
**15.04.87 Patentblatt 87/16**

(45) Bekanntmachung des Hinweises auf die
Patenterteilung:
**02.01.92 Patentblatt 92/01**

(84) Benannte Vertragsstaaten:
**BE CH DE FR GB IT LI NL**

(56) Entgegenhaltungen:
**DE-A- 2 044 104**
**DE-B- 2 748 860**
**GB-A- 1 000 531**

(73) Patentinhaber: **MERCK PATENT GESELL-
SCHAFT MIT BESCHRÄNKTER HAFTUNG
Frankfurter Strasse 250 Postfach 4119
W-6100 Darmstadt(DE)**

(72) Erfinder: **Figueras, Juan Maymô
Sant Elies, 20
E-08006 Barcelona(ES)**

EP 0 218 156 B1

## Beschreibung

Die Erfindung betrifft ein Verfahren zur Herstellung von unlöslichen und unschädlichen Pigmentfarbstoffen, wobei man zunächst eine kolloidale Dispersion eines Küpenfarbstoffes aus der Gruppe der Anthrachinonfarbstoffe, der indigoiden Farbstoffe und der Phthalocyaninfarbstoffe in wäßrig alkalischem Medium durch Bewegung und Erwärmung herstellt, dann den fein verteilten Küpenfarbstoff reduziert unter Bildung einer Lösung der Leukobase und unter Bedingungen, die eine vorzeitige Oxidation ausschließen, in diese Lösung ein fein verteiltes Substrat einbringt, durch Zugabe eines Oxidationsmittels die Leukobase zum Küpenfarbstoff oxidiert, wobei dieser ausfällt und sich auf dem Substrat niederschlägt, dem alkalischen Gemisch nach der Oxidation eine starke Säure in Überschuß zugibt und das mit dem Farbstoff beschichtete Substrat abtrennt, wäscht und trocknet.

Aus der britischen Patentschrift 1 000 531 ist bereits ein Verfahren dieser Art bekannt, bei dem Küpenfarbstoffe in alkalischer Lösung reduziert werden, so daß sie die entsprechende Leukoverbindung bilden. Durch Mischen mit der wäßrigen Dispersion eines Pigments und Oxidation der Leukoverbindung wird der Farbstoff auf dem Pigment niedergeschlagen. Als Pigment wird dabei ein Natriumaluminiumsilicat benutzt. Das so erhaltene farbstoffbeschichtete Pigment wird für technische Zwecke, insbesondere in thermoplastischen Kunststoffen, Gummi, Drucktinten, Lacken und Farben eingesetzt.

Aus der deutschen Patentschrift 20 44 104 ist ein ähnliches Verfahren bekannt, wobei als zu beschichtendes Substrat Titandioxid eingesetzt wird, wobei als besonders vorteilhaft die Verbindung der hohen Deckkraft des Titandioxids mit der Farbbeständigkeit der Küpenfarbstoffe herausgestellt wird. Da der Pigmentfarbstoff sowohl unlöslich als auch unschädlich ist, kann er auch mit Nahrungs- oder Arzneimitteln eingenommen werden oder mit Kosmetika mit dem menschlichen Körper in Berührung gebracht werden und ist somit auch geeignet als färbender Zusatz in Lebensmitteln, Arzneimitteln, Kosmetika, Parfümen, Spielzeug oder Gegenständen des persönlichen Gebrauchs.

Insbesondere für die letztgenannten Anwendungsgebiete ist es zwingend erforderlich, daß das verwendete Pigment frei von schädlichen Verunreinigungen ist. Als Verunreinigungen, die für diese Anwendungen nicht tolerierbar sind, sind z.B. die Schwermetalle Barium, Blei, Arsen sowie auch organische Verunreinigungen wie z.B. aromatische Amine, polycyclische aromatische Kohlenwasserstoffe und von der Herstellung der Farbstoffe stammenden Zwischenprodukte zu nennen.

Für den Fachmann war es daher üblich, von sehr reinen Farbstoffen auszugehen, um zu unschädlichen, reinen Pigmenten zu gelangen. Nachteilig dabei ist jedoch, daß der Preis für diese Farbstoffqualitäten sehr hoch liegt; offenbar begründet durch aufwendige Aufreinigungsarbeiten. Obwohl der Farbstoff nur als Überzug auf das zu beschichtende Substrat aufgebracht wird, stellt dies doch eine erhebliche Kostenbelastung dar, die den Preis für das fertige Pigment in die Höhe treibt.

Es bestand also das Bedürfnis nach einem Verfahren, mit dem diese Pigmentfarbstoffe preiswerter hergestellt werden können, ohne daß die Qualität, insbesondere die Reinheit und Unschädlichkeit der Pigmente, darunter leidet.

Es wurde nun gefunden, daß überraschenderweise als Ausgangsmaterial auch ein technischer Farbstoff eingesetzt werden kann, der große Mengen an Verunreinigungen enthält. Überraschenderweise findet offenbar bei dem Verfahren des Auffällens des Farbstoffs auf das Substrat eine Aufreinigung in der Weise statt, daß die ursprünglich im Farbstoff enthaltenen Verunreinigungen nicht mit auf das Substrat aufgefällt werden, sondern entweder in Lösung bleiben oder aber so fein dispergiert sind, daß sie beim Abtrennen des Pigments durch das Filter laufen und damit durch Auswaschen der Pigmentsuspension entfernt werden können.

Gegenstand der Erfindung ist daher ein Verfahren zur Herstellung von unlöslichen und unschädlichen Pigmentfarbstoffen, wobei man zunächst eine kolloidale Dispersion eines Küpenfarbstoffes aus der Gruppe der Anthrachinonfarbstoffe, der indigoiden Farbstoffe und der Phthalocyaninfarbstoffe in wässrig alkalischem Medium durch Bewegung und Erwärmung herstellt, dann den feinverteilten Küpenfarbstoff reduziert unter Bildung einer Lösung der Leukobase und unter Bedingungen, die eine vorzeitige Oxidation ausschließen, in diese Lösung ein feinverteiltes Substrat einbringt, durch Zugabe eines Oxidationsmittels die Leukobase zum Küpenfarbstoff oxidiert, wobei dieser ausfällt und sich auf dem Substrat niederschlägt, dem alkalischen Gemisch nach der Oxidation eine starke Säure im Überschuß zugibt und das mit dem Farbstoff beschichtete Substrat abtrennt, wäscht und trocknet, das dadurch gekennzeichnet ist, daß der Küpenfarbstoff in einer verunreinigten Form eingesetzt wird, die den reinen Farbstoff nur zu etwa 40 bis 70 Gew.% enthält.

Das erfindungsgemäße Verfahren ist umso erstaunlicher, wenn man bedenkt, daß die nach der Erfindung eingesetzen technischen Farbstoffqualitäten häufig nur einen Farbstoffgehalt von etwa 40 bis 70 % besitzen, während der Rest aus Verunreinigungen besteht. Es war nicht zu erwarten, daß trotz dieser ungünstigen Voraussetzungen sehr gut auch für kosmetische Zwecke sowie für Arznei- und Lebensmittel brauchbare Pigmente gewonnen werden können.

Hauptvorteil der Erfindung ist es daher, daß ausgehend von sehr preiswerten Ausgangsmaterialien hochwertige Produkte hergestellt werden können. Dabei ist das erfindungsgemäße Verfahren relativ breit einsetzbar, indem sehr viele unterschiedliche Substrate als Basismaterialien eingesetzt werden können, und auch eine breite Auswahl von Farbstoffen zur Verfügung steht.

Als Substrate sind beispielsweise gut geeignet die schon bisher genutzten Titandioxidpigmente, aber auch alle anderen Arten von feinteiligen Materialien wie z.B. andere Metalloxide, feinteilige, poröse oder nicht-poröse Kieselgele, Aluminiumoxid, Aluminium- und Magnesiumsilicate wie Talk und Kaolin. Besonders vorteilhaft können auch die unter dem Begriff Perlglanzpigmente bekannten plättchenförmigen Teilchen, wie z.B. mit Metalloxiden, insbesondere Titandioxid, beschichtete glimmerplättchen, Wismutoxichlorid und andere Perlglanzpigmente, eingesetzt werden. Solche Perlglanzpigmente sind beispielsweise aus den deutschen Patentschriften 14 67 468, 22 14 545 und 25 22 572 bekannt.

Insbesondere mit relativ dünnen Farbstoffbeschichtungen, bei denen die Interferenzfarbe des Perglanzpigmentes durchscheint, ergeben sich sehr interessante Effekte.

Diese Substrate werden in feinteiliger Form eingesetzt, insbesondere in Teilchengrößen von etwa 0,01 bis 100 $\mu$m. Dabei ist bei Verwendung von unregelmäßig geformten Substraten wie z.B. Titandioxid oder Kieselsäureanhydrid der untere Bereich von etwa 0,01 bis 1 $\mu$m bevorzugt, während die plättchenförmigen Perlglanzpigmente insbesondere in Teilchengrößen von etwa 5 bis 50 $\mu$m eingesetzt werden.

Im Zusammenhang mit der vorliegenden Erfindung können alle Küpenfarbstoffe verwendet werden, d.h. Farbstoffe, die durch Reduktion in eine wasserlösliche Form überführt werden können, aus der dann durch Oxidation der unlösliche Farbstoff wiedergewonnen werden kann. Typische Vertreter sind z.B. Indigo und andere indigoide Farbstoffe, Indanthren und andere anthrachinoide Farbstoffe, Phthalocyanin- und Naphthalinfarbstoffe sowie auch Schwefelfarbstoffe vom Typ des Hydron-Blau, Immedialfarbstoffe und Leukoküpenfarbstoffester. Eine Aufstellung der gebräuchlichen im Markt angebotenen Küpenfarbstoffe findet sich in: Textilbetrieb April 1978, Seite 67.

Die bei der Beschichtung des Substrats mit dem Küpenfarbstoff angewendeten Bedingungen sind an sich z.B. aus der deutschen Patentschrift 20 44 104 bekannt. Zunächst wird dabei der Küpenfarbstoff in feiner, wäßriger Aufschlämmung durch Reduktion mit Natriumhydrogensulfit, Natriumdithionit, Natriumhydroxymethansulfinat oder Borhydriden, bevorzugt jedoch mit Natriumhydrogensulfit in alkalischer Lösung verküpt.

Vorzugsweise erfolgt dies in einer etwa 2 bis 20, insbesondere etwa 4 bis 10, Gew.%igen Aufschlämmung des Farbstoffs und bei erhöhter Temperatur, die bis unterhalb des Siedepunktes der Aufschlämmung, insbesondere bei etwa 80 bis 95 °C, liegt.

In die so hergestellte Küpe wird dann das Substrat eingebracht, wobei man vorzugsweise, um eine vorzeitige Oxidation des Farbstoffs zu vermeiden, in diesem Stadium des Verfahrens das Einrühren von Luft vermeidet, gegebenenfalls sogar unter Schutzgasatmosphäre arbeitet. Die Menge des zugegebenen Substrats richtet sich nach der Menge des in Lösung befindlichen Farbstoffs und der gewüschten Belegung des Substrats. In der Regel wird man etwa soviel Substrat zugeben, daß das Gewichtsverhältnis von Küpenfarbstoff zu Substrat etwa 1:1 bis 1:20 beträgt.

Die danach erfolgende Oxidation kann in an sich bekannter Weise durchgeführt werden, z.B. durch Einrühren oder Einblasen von Luft, Sauerstoff oder Ozon, gegebenenfalls auch unter erhöhtem Druck. Anstelle oder zusätzlich kann z.B. Wasserstoffperoxid oder ein anderes Oxidationsmittel zugegeben werden. Vorzugsweise erfolgt auch die Oxidation bei erhöhter Temperatur, z.B. bei etwa 60 bis 90 °C, insbesondere etwa 70 bis 80 °C. In dem Maße, in dem bei der Oxidation der unlösliche Küpenfarbstoff entsteht, wird dieser auf der Oberfläche des Substrats niedergeschlagen und überzieht dieses mit einer homogenen Schicht.

Nach Beendigung der Oxidation wird die stark alkalische Suspension mit einer starken Säure wie z.B. Salzsäure, Schwefelsäure, Salpetersäure oder auch Mischungen dieser Säuren, insbesondere einer Mischung von Salz- und Salpetersäure, bis zu einem pH von vorzugsweise unterhalb 1 angesäuert und noch einige Zeit bei erhöhter Temperatur, vorzugsweise oberhalb 70 °C, gerührt. Das gebildete Farbpigment kann danach abgetrennt, mit Wasser gewaschen und getrocknet werden. Insbesondere bei für Lebens- und Arzneimittel geeigneten Qualitäten sollten die Pigmente sehr sorgfältig gewaschen werden, wobei es z.B. als Indiz für ausreichendes Waschen angesehen werden kann, wenn sich die Leitfähigkeit des Waschwassers nicht mehr ändert.

Das Pigment wird danach bei einer Temperatur von etwa 100 bis 120 °C getrocknet, wobei es sich als vorteilhaft erwiesen hat, die Temperatur in der Schlußphase des Trockenprozesses zumindest für einige Minuten auf etwa 140 bis 150 °C zu erhöhen. Das getrocknete Produkt wird zum Aufbrechen von Agglomeraten gemahlen und dann abgesiebt. Bei beschichteten plättchenförmigen Perlglanzpigmenten ist selbstverständlich darauf zu achten, daß hierbei nicht die Pigmentteilchen zerstört werden.

Das Pigment ist danach unmittelbar zu allen Anwendungen z.B. in Lacken, Farben aber insbesondere auch in Lebens-und Arzneimittel und in der Kosmetik einsetzbar, so daß ein wertvolles neues Verfahren zur Herstellung dieser hochwertigen Pigmente zur Verfügung steht.

Beispiel 1

Zu 10 l Wasser von etwa 90 bis 95 °C werden nacheinander unter leichtem Rühren 400 g des Farbstoffs Rosa B (Colour-index Nr. 73360) in einer technischen Qualität, die etwa 50 % reinen Farbstoff enthält, 550 g wässrige Kalilauge mit einer Dichte von 40° Baumé und eine Lösung von 200 g Natriumhydrogensulfit in 1000 ml Wasser gegeben. In der so hergestellten Küpe werden 2000 g eines silberfarbenen Perlglanzpigments, das aus mit Titandioxid beschichtetem Glimmer besteht, dispergiert und es wird nun durch heftiges Rühren Luft in die Suspension eingerührt, wobei eine Temperatur von etwa 75 bis 80 °C aufrecht erhalten wird. Nach etwa 15 Minuten werden zusätzlich 800 g 15 Gew. %iges Wasserstoffperoxid mit einer Geschwindigkeit von etwa 20 ml/min zugegeben. Nach etwa 10minütigem Nachrühren bei etwa 85 bis 90 °C wird mit etwa 600 g 35 %iger Salzsäure ein pH-Wert von 0,5 eingestellt, wobei die Temperatur bei etwa 70 °C gehalten wird. Nach etwa 2stündiger Säurebehandlung wird das dispergierte Farbpigment abgetrennt und solange mit Wasser gewaschen bis die Leitfähigkeit des Waschwassers konstant bleibt. Das Produkt wird dann etwa 20 Stunden bei 110 °C und etwa 3 bis 4 Stunden bei 145 bis 150 °C getrocknet, in einer Trommel zerteilt und abgesiebt.

Beispiel 2

Um eine höhere Farbstoffbelegung zu erzielen, wird das Verfahren nach Beispiel 1 wiederholt, wobei die gleiche Menge Perlglanzpigment eingesetzt, jedoch eine Küpe verwendet wird, die so hergestellt ist, daß zu 12 l Wasser jeweils im Vergleich zu Beispiel 1 doppelte Mengen des Farbstoffs, der Kalilauge und des Natriumhydrogensulfits gegeben wird. Die bei der Oxidation zusätzlich zugegebene Menge an 15 Gew.%igem Wasserstoffperoxid beträgt 1200 g.

Beispiel 3

Analog zu Beispiel 1 wird eine Küpe aus 20 l Wasser, 2000 g Rosa B (etwa 50 %ig), 2800 g Kaliumhydroxidlösung und 1000 g Natriumhydrogensulfit in 5 l Wasser hergestellt und darin 2000 g Titandioxidpigment dispergiert. Dazu werden innerhalb von 60 Minuten 2400 g etwa 30 %iges Wasserstoffperoxid und 4800 g 30 %ige Ammoniaklösung gegeben. Anschließend wird mit Salzsäure neutralisiert und mit 2400 g 35 %iger Salzsäure und 800 g 60 %iger Salpetersäure angesäuert und etwa 2 Stunden bei 90 bis 95 °C gerührt, danach das Farbpigment abgetrennt und wie in Beispiel 1 beschrieben gewaschen und getrocknet. Nach Zermahlen und Sieben erhält man ein sehr reines Farbpigment mit hoher Deckkraft.

## Patentansprüche

1. Verfahren zur Herstellung von unlöslichen und unschädlichen Pigmentfarbstoffen, wobei man zunächst eine kolloidale Dispersion eines Küpenfarbstoffes aus der Gruppe der Anthrachinonfarbstoffe, der indigoiden Farbstoffe und der Phthalocyaninfarbstoffe in wäßrig alkalischem Medium durch Bewegung und Erwärmung herstellt, dann den feinverteilten Küpenfarbstoff reduziert unter Bildung einer Lösung der Leukobase und unter Bedingungen, die eine vorzeitige Oxidation ausschließen, in diese Lösung ein feinverteiltes Substrat einbringt, durch Zugabe eines Oxidationsmittels die Leukobase zum Küpenfarbstoff oxidiert, wobei dieser aufällt und sich auf dem Substrat niederschlägt, dem alkalischen Gemisch nach der Oxidation eine starke Säure im Überschuß zugibt und das mit dem Farbstoff beschichtete Substrat abtrennt, wäscht und trocknet, dadurch gekennzeichnet, daß der Küpenfarbstoff in einer verunreinigten Form eingesetzt wird, die den reinen Farbstoff nur zu etwa 40 bis 70 Gew.% enthält.

2. Verfahren nach Anspruch 1, dadurch gekennzeichnet, daß als zu beschichtendes Substrat Titandioxid oder andere Metalloxide, Kieselsäureanhydrid, Aluminium- und Magnesiumsilicate wie Talk und Kaolin oder mit Metalloxiden beschichteter Glimmer eingesetzt wird.

3. Verfahren nach Anspruch 1 oder 2, dadurch gekennzeichnet, daß man zur Oxidation zunächst Luft einrührt und zur Beschleunigung bzw. Vervollständigung der Oxidation Wasserstoffperoxid oder ozonisierte Luft zuführt.

4. Verfahren nach einem der Ansprüche 1 bis 3, dadurch gekennzeichnet, daß das Verhältnis vom Küpenfarbstoff zu Substrat etwa 1:1 bis 1:20 beträgt.

## Claims

1. Process for preparing insoluble and safe pigment dyes by first preparing a colloidal dispersion of a vat dye from the group consisting of the anthraquinone dyes, the indigoid dyes and the phthalocyanine dyes in an aqueous alkaline medium by agitation and heating, then reducing the finely divided vat dye to form a solution of the leucobase and, under conditions which rule out premature oxidation, introducing into this solution a finely divided substrate, adding an oxidizing agent to oxidize the leucobase to the vat dye, which thereby precipitates and deposits on the substrate, adding to the alkaline mixture after the oxidation a strong acid in excess and separating off, washing and drying the dye-coated substrate, characterized in that the vat dye is used in an impure form which contains the pure dye in an amount of only about 40 to 70% by weight.

2. Process according to Claim 1, characterized in that the substrate to be coated which is used is titanium dioxide or other metal oxides, silicic acid anhydride, aluminium and magnesium silicates such as talc and kaolin or mica coated with metal oxides.

3. Process according to Claim 1 or 2, characterized in that, to obtain oxidation, first air is stirred in and, to speed up and/or complete the oxidation, hydrogen peroxide or ozonized air is supplied.

4. Process according to any one of Claims 1 to 3, characterized in that the ratio of vat dye to substrate is about 1:1 to 1:20.

**Revendications**

1. Procédé de fabrication de colorants à pigments non solubles et non toxiques qui consiste à préparer d'abord une dispersion colloïdale d'un colorant de cuve du groupe des colorants à l'anthraquinone, à l'indigo et à la phtalocyanine dans un milieu alcalin aqueux par agitation et chauffage, à réduire ensuite le colorant de cuve finement dispersé pour former une solution de leucobase et, dans des conditions qui excluent une oxydation prématurée, à introduire un substrat finement dispersé dans cette solution, à oxyder la leucobase par l'addition d'un oxydant pour le colorant de cuve, celui-ci précipitant et se déposant sur le substrat, à ajouter après l'oxydation au mélange alcalin un acide fort en excès et à isoler, laver et sécher le substrat enduit du colorant, procédé caractérisé en ce que le colorant de cuve est utilisé dans une forme non purifiée qui ne contient le colorant pur qu'à raison d'environ 40 à 70 % en poids.

2. Procédé selon la revendication 1,caractérisé en ce que du dioxyde de titane ou d'autres oxydes métalliques, de l'anhydride d'acide silicique, du silicate d'aluminium et de magnésium comme le talc et le kaolin ou du mica enduit d'oxydes métalliques sont utilisés comme substrat à enduire.

3. Procédé selon la revendication 1 ou 2, caractérisé en ce que de l'air est d'abord introduit pour l'oxydation et, pour accélérer ou achever l'oxydation, du peroxyde d'hydrogène ou de l'air ozonisé est amené.

4. Procédé selon une des revendications 1 à 3, caractérisé en ce que le rapport du colorant de cuve au substrat est d'environ 1:1 à 1:20.